(19) Europäisches Patentamt
European Patent Office
Office européen des brevets

(11) Veröffentlichungsnummer : **0 195 328**
**B1**

(12) # EUROPÄISCHE PATENTSCHRIFT

(45) Veröffentlichungstag der Patentschrift : **01.02.89**

(51) Int. Cl.⁴ : **C 07 C101/26**, C 08 K 5/17, C 08 F 2/26

(21) Anmeldenummer : **86103075.7**

(22) Anmeldetag : **07.03.86**

(54) **Aminobernsteinsäurederivate und ihre Verwendung als Emulgatoren für Polymerdispersionen.**

(30) Priorität : **19.03.85 DE 3509822**

(43) Veröffentlichungstag der Anmeldung : **24.09.86 Patentblatt 86/39**

(45) Bekanntmachung des Hinweises auf die Patenterteilung : **01.02.89 Patentblatt 89/05**

(84) Benannte Vertragsstaaten : **DE FR GB IT**

(56) Entgegenhaltungen :
**DE-A- 2 341 045**
**DE-A- 3 149 201**
**GB-A- 2 005 663**
**US-A- 3 077 487**

(73) Patentinhaber : **BAYER AG**
**Konzernverwaltung RP Patentabteilung**
**D-5090 Leverkusen 1 Bayerwerk (DE)**

(72) Erfinder : **Hendricks, Udo Winfried, Dr.**
**Am Höhenfeld 12**
**D-5068 Odenthal (DE)**
Erfinder : **Schmidt, Adolf, Dr.**
**Roggendorfstrasse 67**
**D-5000 Köln 80 (DE)**

**EP 0 195 328 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Gegenstand der Erfindung sind Aminobernsteinsäurederivate der Formel (I)

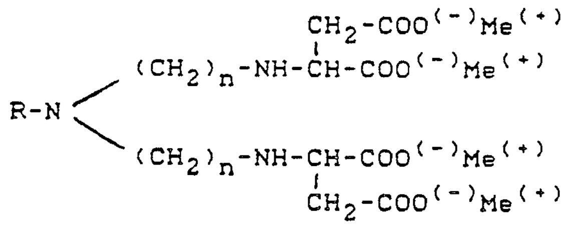

(I)

in der

R für einen Alkyl- oder Alkenylrest mit 10 bis 22 C-Atomen, der verzweigt und/oder durch ein oder mehrere Sauerstoffatome unterbrochen sein kann,

n für 2 oder 3 und

$Me^{(+)}$ für das Wasserstoffion oder ein einwertiges Kation oder 2 $Me^{(+)}$ für ein zweiwertiges Kation stehen.

Beispiele für R sind der Dodecyl-, Tetradecyl-, Hexadecyl-, Octadecyl-, Octadecenyl-, Dodecyloxypropyl- und der Octadecyloxypropyl-Rest.

Als Kation $Me^{(+)}$ kommen Alkali-, Erdalkali-, Ammonium-, Mono-, Di-, Tri-alkylammoniumionen und Alkanolammiumionen, wie z. B. das Hydroxyethylammoniumion, das Hydroxypropylammoniumion, das Bis-(hydroxyethyl)-ammoniumion und das Tris-(hydroxyethyl)-ammoniumion in Frage.

Ein weiterer Gegenstand der Erfindung ist die Herstellung dieser Verbindungen und ihre Verwendung als Emulgatoren zur Emulgierung fester und flüssiger Substanzen, insbesondere als Hilfsmittel bei der Emulsions- und Dispersionspolymerisation radikalisch polymerisierbarer Monomerer sowie als Zusätze zur Verbesserung der Scherstabilität disperser Systeme.

Verbindungen der allgemeinen Formel (I), in der $Me^{(+)}$ für Alkali- oder Erdalkaliion stehen, können erhalten werden durch Addition von Maleinsäuremono- oder -dialkylestern der Formel (II)

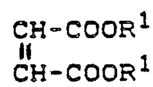

(II)

oder von Fumarsäuremono- oder -dialkylestern der Formel (III)

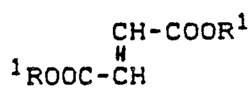

(III)

in denen einer der Reste $R^1$ Alkyl mit 1 bis 4 Kohlenstoffatomen und der andere Wasserstoff oder Alkyl mit 1 bis 4 Kohlenstoffatomen bedeutet an Bis-(ω-aminoalkyl)-alkylamine der Formel (IV)

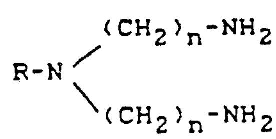

(VI)

in der R und n die obengenannte Bedeutung haben, zu den Estern der Formel (V)

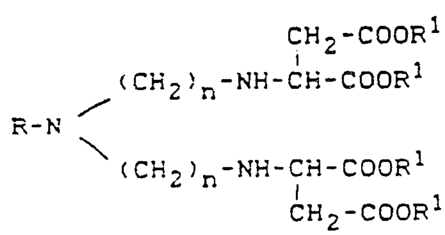

(V)

in der R, n und $R^1$ die vorgenannte Bedeutung haben, und anschließende Hydrolyse dieser Ester mit Alkali- oder Erdalkalihydroxiden.

Verbindungen der Formel (I), in denen $Me^{(-)}$ das Ammoniumion, ein Alkyl- oder Alkanolammoniumion ist, können aus den entsprechenden Alkali- oder Erdalkalisalzen erhalten werden, indem man in bekannter Weise durch Zusatz mindestens äquivalenter Mengen an Mineralsäure, z. B. Salzsäure oder Schwefelsäure, die freien Carbonsauren der Formel (I), herstellt, diese isoliert und mit Ammoniak, Alkylamin oder Alkanolaminen neutralisiert.

Die Bis-(ω-aminoalkyl)-alkylamine der Formel (IV) sind bekannt ; ihre Herstellung ist beispielsweise in der US-PS 3 615 797 und in der DE-OS 3 145 733 beschrieben. Die Addition von Maleinsäure- oder Fumarsäureestern an Amine der Formel (IV) kann nach bekannten Verfahren in Abwesenheit oder in Gegenwart von Lösungsmitteln wie niederen Alkoholen, Ketonen, Ethern oder aromatischen Kohlenwasserstoffen bei Temperaturen von 20° bis 120 °C, vorzugsweise bei 40 bis 60 °C erfolgen. Das Molverhältnis der Maleinsäure- oder Fumarsäureester zu den Aminen der Formel (IV) beträgt mindestens 2 : 1, vorzugsweise 2, 1 bis 2, 0 : 1.

Die Hydrolyse der Ester der allgemeinen Formel (V) kann mit wäßrigen oder alkoholischen Lösungen von Alkali- oder Erdalkalihydroxiden, gegebenenfalls unter Mitverwendung von Lösungsmitteln, wie niederen Alkoholen, vorzugsweise bei erhöhten Temperaturen erfolgen. Das Molverhältnis Alkalihydroxid zu Ester der Formel (V) beträgt dabei mindestens 4 : 1, das Molverhältnis Erdalkalihydroxid zu Ester mindestens 2 : 1. Die neuen Emulgatoren können zur Herstellung scherstabiler Kunststoffdispersionen verwendet werden.

Kunststoffdispersionen sollen eine hohe Scherstabilität besitzen, damit sich bei ihrer Herstellung in den Reaktoren und Förderorganen möglichst wenig Koagulat bildet. Man kann zwar durch Erhöhen der Emulgatorkonzentration die Scherstabilität verbessern, dies führt aber zu verstärkter Schaumbildung und Verschlechterung anwendungstechnischer Eigenschaften (insbesondere der Wasserfestigkeit der aus diesen Dispersionen gebildeten Filme und Überzüge).

Die erfindungsgemäßen Emulgatoren verbessern zwar die Scherstabilität, beeinträchtigen aber die Koagulierbarkeit der Dispersionen nicht. Sie sind generell zur Emulsionspolymerisation aller bekannten radikalisch polymerisierbaren Monomeren und zu deren Copolymerisation geeignet.

Geeignete Monomere sind beispielsweise Ethylen, Butadien, Chloropren, Styrol, alpha-Methylstyrol, Ester der Acrylsäure oder Methacrylsäure mit niederen Alkoholen, wie Methylacrylat, Ethylacrylat, Butylacrylat, Methylmethacrylat, Ethylmethacrylat, Butylmethacrylat, Vinylacetat, Vinylversat, Vinylpropionat, Vinylchlorid oder copolymerisierbare Mischungen dieser Monomeren.

Bei der diskontinuierlichen Emulsionspolymerisation können die erfindungsgemäßen Emulgatoren vollständing mit dem Wasser vorgelegt werden, man kann auch nur einen Teil vorlegen und den Rest nachdosieren, während das Monomere bzw. Monomerengemisch vorgelegt wird.

Im allgemeinen werden die Emulgatoren in Mengen von 0,5 bis 8 Gew.-%, bezogen auf das eingesetzte Monomer, verwendet.

Bei der halbkontinuierlichen Emulsionspolymerisation werden die Monomeren in das polymerisierende System eingespeist. Dieses Verfahren kann mit und ohne Zusatz eines Keimlatex durchgeführt werden (vgl. z. B. J. Snuparek und F. Krska, Journal of Applied Polymer Science, Vol 20, 1753-1764 (1978)). Die erfindungsgemäßen Emulgatoren können sowohl zur Bildung des Keimlatex verwendet werden als auch zur Emulgierung der nachzudosierenden Monomeren. Sie können auch gesondert zur Monomerendosierung zugespeist werden.

Bei kontinuierlicher Emulsionspolymerisation können die erfindungsgemäßen Emulgatoren bereits in den ersten Reaktor eindosiert werden und an der Teilchenbildung mitwirken. Es ist aber auch möglich und sogar vorteilhaft, die Bildung der Latexteilchen durch an sich bekannte Emulgatoren vorzunehmen und die erfindungsgemäßen Emulgatoren erst nachzudosieren, wenn aufgrund der Verarmung des polymerisierenden Systems an Emulgator Gefahr der Koagulation durch Scherbeanspruchung besteht. Scherbeanspruchung kann auftreten an Einbauten von Rohrschlangen, Rührern, eintauchenden Stutzen oder Ausschleusungsvorrichtungen von Latex. Bei einer Kesselkaskade wird man die erfindungsgemäßen Emulgatoren vorzugsweise in die letzten Reaktoren einspeisen, bei Anordnungen, welche im wesentlichen aus einem Vorreaktor (Seeder) und Hauptreaktor (meist ein Rührautoklav (CSTR)) bestehen, dosiert man die erfindungsgemäßen Emulgatoren in den Hauptreaktor.

Es ist auch möglich, fertigen Dispersionen, die scherempfindlich sind, durch nachträglichen Zusatz der erfindungsgemäßen Emulgatoren eine besonders gute Scherstabilität oder sogar Redispergierbarkeit zu verleihen. Hierzu genügen meist geringe Zusätze von 0,2 bis 0,5 Gew.-%, bezogen auf Polymerisat in der betreffenden Dispersion.

Die in Gegenwart der erfindungsgemäßen Emulgatoren hergestellten Dispersionen neigen kaum zur Schaumbildung, was sich beim Entmonomerisieren vorteilhaft auswirkt. Die im alkalischen pH-Bereich äußerst scherstabilen Dispersionen können durch Zugabe von sauer reagierenden Stoffen sensibilisiert, agglomeriert und schließlich vollständig koaguliert werden. Es ist auch möglich, die Fällung der Polymerisate mit Hilfe von Metallionen, insbesondere mehrwertigen Ionen wie Ca-Ionen, Mg-Ionen oder Al-Ionen vorzunehmen. Hierbei kann durch leicht experimentell zu ermittelnde Fällungsbedingungen die Fällung so gesteuert werden, daß das Koagulat in feinteiliger, gut filtrierbarer und klumpenfreier Form anfällt. Rasche pH-Erniedrigung bei hoher Feststoffkonzentration führt dabei allgemein zu gröberen Koagulatteilchen.

Die erfindungsgemäßen Emulgatoren bilden mit mit 2- und mehrwertigen Metallionen Komplexe ; sie

besitzen also im Gegensatz zu den üblichen Carboxylat-Seifen eine ausgezeichnete $Ca^{++}$- und $Mg^{++}$-Ionen-Toleranz.

In den folgenden Beispielen sind Teile immer Gewichtsteile wenn nichts anderes angegeben ist.

## Beispiel 1

182 Teile eines Gemischs von Bis-(3-aminopropyl)-alkylaminen der Formel

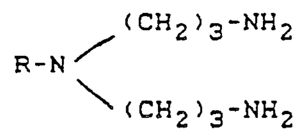

(Zusammensetzung des Alkylrestes R in Mol-% $C_{12}$-Alkyl 1 %, $C_{14}$-Alkyl 2 %, $C_{16}$-Alkyl 30 %, $C_{18}$-Alkyl 66 %, $C_{20}$-Alkyl 1 %) wurden bei 30 bis 40 °C mit 135 Teilen Maleinsäuredimethylester versetzt und anschließend bei gleicher Temperatur 6 Stunden gerührt. Nach Klärung durch Filtration erhielt man 310 Teile einer viskosen Flüssigkeit. Bei der dünnschichtchromatographischen Untersuchung wurde kein Maleinsäureester mehr gefunden.

Basen-N : Ber. : 6,2 % Gef. : 6,4 %
Tertiärer Stickstoff : Ber. : 2,12 % Gef. : 2,02 %

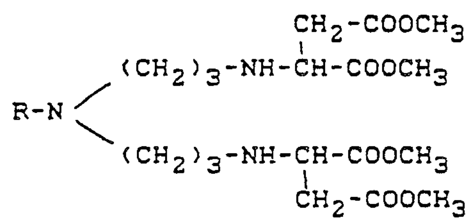

204 Teile des oben beschriebenen Reaktionsproduktes wurden mit 70 Teilen Methanol und 90 Teilen Wasser vermischt, bei 70 bis 80 °C langsam mit 240 Teilen einer 20 %igen Natronlauge versetzt und anschließend 1 Stunde bei der gleichen Temperatur gerührt. Man erhielt 604 Teile einer viskosen, klaren Lösung mit einem Gehalt von 35 % der Verbindung der Formel

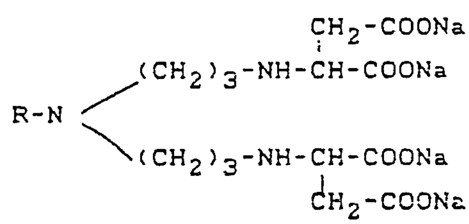

## Beispiel 2

750 Teile einer 30 %igen wäßrigen Lösung der in Beispiel 1 beschriebenen Verbindung der Formel

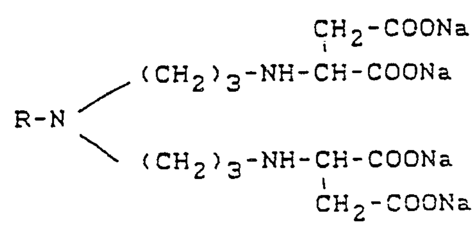

wurden bei 20 bis 30 °C mit 480 Teilen 10 %iger wäßriger Salzsäure versetzt. Der gebildete Feststoff wurde abgesaugt, mit Wasser gewaschen, in 400 Teilen Wasser dispergiert und durch Zusatz von 45 Teilen einer 25 %igen Ammoniaklösung gelöst.

Es wurden 800 g einer wäßrigen Lösung erhalten, die 28 % des Ammoniumsalzes der Formel

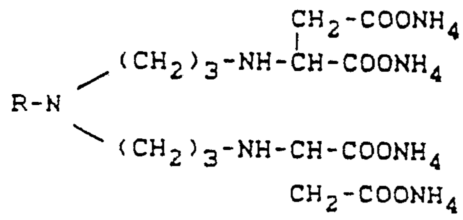

enthielt.

Beispiel 3

157 Teile eines Gemischs von Bis-(3-aminopropyl)-alkylaminen der Formel

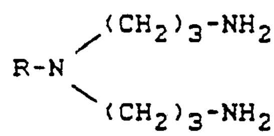

(Zusammensetzung des Alkylrestes R in Mol-% $C_8$-Alkyl 7 %, $C_{10}$-Alkyl 6 %, $C_{12}$-Alkyl 51 %, $C_{14}$-Alkyl 19 %, $C_{16}$-Alkyl 8 %, $C_{18}$-Alkyl 9 %) wurden bei 30 bis 40 °C mit 144 Teilen Maleinsäuredimethylester versetzt und anschließend 6 Stunden bei gleicher Temperatur gerührt. Nach Klärung durch Filtration wurden 298 Teile einer viskosen Flüssigkeit erhalten.

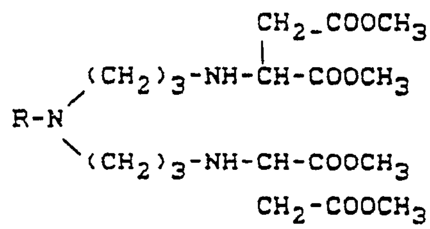

Basen-N : Ber. : 6,9 %  Gef. : 6,4 %
Tertiärer Stickstoff : Ber. : 2,3 %  Gef. : 2,1 %
Brechungsindex $n_D^{20}$ 1.4668

280 Teile des oben beschriebenen Reaktionsproduktes wurden mit 70 Teilen Methanol und 170 Teilen Wasser vermischt, bei 50 bis 60 °C mit 372 Teilen einer 20 %igen Natronlauge versetzt und anschließend 2 Stunden bei 70 bis 80 °C gerührt. Nach dem Abdestillieren von Methanol und Wasser wurden 710 Teile einer sehr viskosen Flüssigkeit mit einem Gehalt von 40 % der Verbindung der Formel

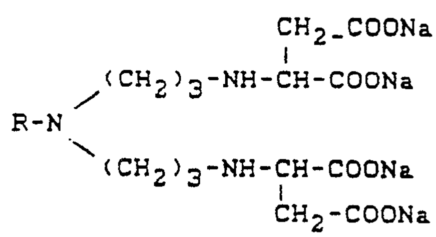

erhalten.

Beispiel 4

243 Teile 3-Dodecyloxypropylamin, hergestellt nach DAS 1.094.748, Beispiel 3, wurden mit 10 Teilen 37 %iger Salzsäure vermischt und anschließend bei 60 bis 70 °C mit 122 Teilen Acrylnitril versetzt. Die Mischung wurde 16 Stunden bei 70 bis 80 °C gerührt und dann bei 45 bis 50 °C mit 180 Teilen 10 %iger Natronlauge versetzt. Die sich abtrennende wäßrige Phase wurde entfernt und organische Phase im Vakuum von Wasser und überschüssigem Acrylnitril befreit. Es wurden 335 Teile des Dicyanethylderivates der nachstehenden Formel erhalten.

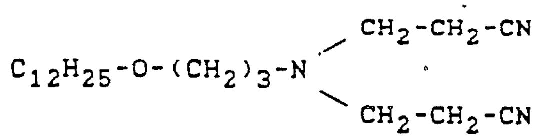

Basen-N : Ber. : 4,0 % Gef. : 3,8 %

Tertiärer Stickstoff : Ber. : 4,0 % Gef. : 3,7 %

225 Teile des vorstehend beschriebenen Produktes wurden mit 50 Teilen Methanol, 10 Teilen Raney-Cobalt und 100 Teilen flüssigem Ammoniak vermischt und in einem Autoklaven bei 90 bis 100 °C und einem Wasserstoffdruck von 100 bis 120 bar 5 Stunden hydriert. Nach dem Abfiltrieren des Katalysators wurden 218 Teile N,N-Bis-(3-aminopropyl)-3-dodecyloxypropylamin erhalten.

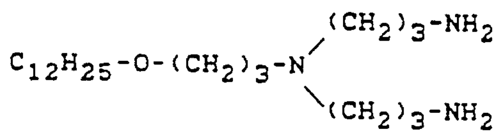

Basen-N : Ber. : 11,8 % Gef. : 11,2 %

Tertiärer Stickstoff : Ber. : 3,9 % Gef. : 3,5 %

Zu 179 Teilen des vorstehend beschriebenen Amins wurden bei 40 bis 45 °C 172 Teile Maleinsäurediethylester getropft. Nach vierstündigem Rühren bei gleicher Temperatur wurden 350 Teile einer viskosen Flüssigkeit erhalten, in der sich nach dünnschichtchromatographischer Untersuchung kein Maleinsäurediethylester mehr nachweisen ließ.

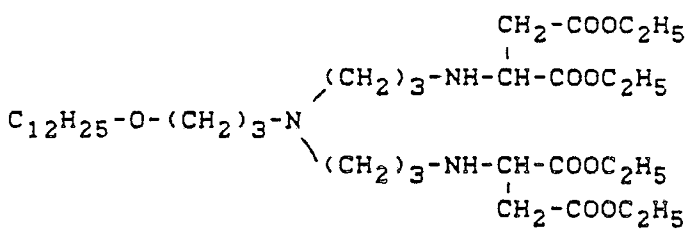

Basen-N : Ber. : 5,99 % Gef. : 5,6 %

Tertiärer Stickstoff : Ber. : 1,99 % Gef. : 2,1 %

Zu einem Gemisch aus 210 Teilen der oben beschriebenen Verbindung, 80 Teilen Wasser und 40 Teilen Ethanol wurden bei 50 bis 60 °C 240 Teile einer 20 %igen Natronlauge getropft. Das Gemisch wurde 2 Stunden bei 70 bis 80 °C gerührt. Es wurden 570 Teile einer viskosen klaren Lösung erhalten, die 35 % der Verbindung der Formel

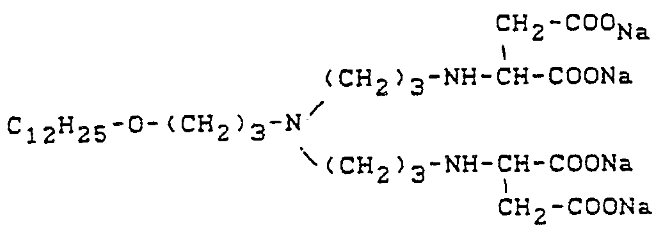

enthielt.

Beispiel 5

Polymerisation in Gegenwart eines erfindungsgemäßen Emulgators

In einem 6 Liter Edelstahlautoklaven mit Blattrührer (150 Umdrehungen pro Minute) und automatischer Innentemperaturregelung werden eingebracht :

| | |
|---|---|
| Entionisiertes Wasser | 2 032 g |
| Emulgator, hergestellt gemäß Beispiel 1 in Form einer 10 %igen Lösung | 547 g |
| Tertiäres Dodecylmercaptan als Regler | 5,7 g |

Der freie Autoklavenraum wird mit Stickstoff gespült, indem man abwechselnd evakuiert und mit Stickstoff begast. Ins Vakuum werden schließlich eingesaugt :

| | |
|---|---|
| Butadien | 1 832 g |

Das Gemisch wird auf 60 °C erwärmt und nach Erreichen von Druck- und Temperaturkonstanz die Polymerisation durch Einspritzen einer Aktivatorlösung, bestehend aus

| | |
|---|---|
| 2,5 %iger wäßriger $K_2S_2O_8$-Lösung | 172,0 g |

initiiert.

In nachfolgender Tabelle sind Polymerisationszeit (in h), Latex-Feststoffgehalt (Gew.-%), Innentemperatur (°C), Druck (bar) sowie pH-Wert angeführt (vgl. Tabelle 1).

Tabelle 1

| Polym. Zeit (h) | Festst. (%) | Temp. °C | p (bar) | Latex pH-Wert |
|---|---|---|---|---|
| 0 | - | 60 | 8,7 | - |
| 1 | 3,5 | 60 | 8,8 | 11,5 |
| 2 | 6,0 | 60 | 8,2 | 12,1 |
| 3 | 8,7 | 60 | 7,8 | 11,9 |
| 4 | 11,0 | 60 | 7,4 | 11,9 |
| 5 | 13,0 | 60 | 7,0 | 11,7 |
| 6 | 15,0 | 60 | 6,6 | 11,7 |
| 7 | 20,0 | 60 | 6,4 | 12,1 |
| 8 | 23,0 | 62 | 6,6 | 12,1 |
| 9 | 27,0 | 62 | 6,4 | 12,1 |
| 10 | 30,0 | 62 | 5,5 | 12,1 |
| 11 | 33,5 | 67,5 | 5,2 | 12,1 |
| 12 | 36,0 | 67,7 | 3,5 | 11,8 |
| 13 | 37,5 | 67,8 | 2,2 | 11,6 |
| 14 | 38,0 | 67,9 | 1,4 | 11,5 |
| 15 | 39,0 | 67,9 | 0,8 | 11,5 |
| 16 | 39,5 | 67,9 | 0,6 | 12,0 |
| 17 | 40,0 | 67,9 | 0,4 | 11,8 |

Der Sollwert der Innentemperatur wurde verändert.

Nach 17 Stunden wurde die Polymerisation durch Abkühlen auf Zimmertemperatur unterbrochen und der Latex abgelassen. Es resultieren ca. 4 kg ca. 40 %iger Rohlatex. Im Autoklaven fanden sich ca. 4 g Koagulat vor, der Latex war vollkommen koagulatfrei, es blieb kein Ausfall nach Passieren durch ein 200 Mikrometer Maschenweite-Tuch, danach auch nach Passieren durch ein 30 Mikrometer Maschenweite-Tuch zurück. Der Latex konnte ohne Schaumbildung entmonomerisiert werden, indem man bei 50 °C ca. 200 ml Wasser im Vakuum abdestillierte und gleichzeitig 200 ml frisches destilliertes Wasser zuführte, so daß der Feststoffgehalt konstant blieb. Durch das Entgasen entstand kein Ausfall im Latex. Der entmonomerisierte, ca. 40 %ige Polybutadienlatex trocknet zu einem klaren Film auf, der sich beim 2-stündigen Erhitzen auf 150 °C kaum merklich gelblich verfärbt und sich in dieser Hinsicht günstiger verhält als ein mit Harzseife oder Kaliumoleat hergestellter Latexfilm. Der Latex läßt sich zwischen den Fingerkuppen nicht zu Koagulatwürstchen zerreiben, vielmehr bleibt er bis zum Trockenreiben glatt. Ein Test bei anderen Polybutadienlatices, welche mit anderen Emulgatoren nach gleicher Rezeptur hergestellt werden, ergibt beim Zerreiben zwischen den Fingerkuppen sofort Koagulatwürstchen.

Der Latex mit dem Feststoffgehalt 39,93 % und dem pH-Wert von 11,1 besaß eine Auslaufzeit von 31,5 Sekunden im Auslaufbecher nach DIN 53 211 (100 ccm Dispersion, 20 °C, 4 mm Düse). Die mit Hilfe eines Brookfield-Viskotesters Typ Synchro Lectric Viskosimeter Modell LVP, Baujahr 1974 mit Spindel 2 gemessene Viskosität beträgt bei :

| | |
|---|---|
| 6 Umdrehungen pro Minute | 270 centipoise |
| 12 Umdrehungen pro Minute | 268 centipoise |
| 30 Umdrehungen pro Minute | 264 centipoise |
| 60 Umdrehungen pro Minute | 255 centipoise |

Die elektrische Leitfähigkeit des Latex lag bei ca. 3,6 Millisiemens, die elektrische Leitfähigkeit einer Lösung von 0,746 g Kaliumchlorid pro Liter liegt vergleichsweise bei 1,21 Millisiemens. Der Latex läßt sich einfrieren und wieder auftauen, wobei kein grobes Koagulat auftritt. Der Latexteilchendurchmesser des

Latex lag nach Trübungsmessungen bei ca. 60 nm. Eine genauere Untersuchung mit Hilfe der Ultrazentrifuge ergab folgende Verteilung :

| | | | |
|---|---|---|---|
| D 0 | : 30,7 nm | DAN | : 44,2 nm (Nanometer) |
| D 10 | : 35,8 | DAL | : 46,5 |
| D 20 | : 39,6 | DAF | : 49,2 |
| D 30 | : 43,0 | DAV | : 53,2 |
| D 40 | : 46,1 | DVN | : 46,6 |
| D 50 | : 49,1 | | |
| D 60 | : 52,5 | | |
| D 70 | : 56,3 | | |
| D 80 | : 60,9 | | |
| D 90 | : 68,1 | | |
| D 100 | : ca. 1 000 | | |

Die Bezeichnungen D 0 bis D 100 beziehen sich auf 0 bis 100 % Masse. Zum 10-ten Massenprozent gehört der Durchmesser 35,8 nm, zum 20-ten Massenprozent der Durchmesser 39,6 nm usw. Die Bezeichnungen DAN bis DVN bedeuten : Mittlerer Durchmesser der Anzahlverteilung, mittlerer Durchmesser der Durchmesserverteilung, mittlerer Durchmesser der Flächenverteilung, mittlerer Durchmesser der Volumenverteilung, Durchmesser zum mittleren Volumen der Anzahlverteilung. Näheres zu den Grundbegriffen der Teilchengrößenanalyse siehe DIN Norm 53 206, Blatt 1, August 1972.

Zur Beurteilung der Scherstabilität der Latices wurde wie folgt vorgegangen (Schertest) :

500 g Latex wurden auf pH = 10 eingestellt indem man 5 %ige Essigsäure vorsichtig unter Rühren zufügte. Danach wurde der Latex auf einen Feststoffgehalt von 35 Gew.-% verdünnt.

80 g dieses 36 %igen Latex füllte man in einen 21 cm hohen, außen mit Kühlmantel versehenen zylindrischen Metallbecher mit lichtem Durchmesser 6 cm. Der Metallbecher war in einen Edelstahlklotz der Breite 13 cm, der Länge 13 cm und der Höhe 5 cm mit zylindrischer Aussparung eingebettet und in diesem durch Rändelschrauben befestigt. Im Inneren des Metallbechers befanden sich, gleichmäßig verteilt und mit Spannringen an den Wänden befestigt, 4 vom Boden über den Gefäßrand führende Wellenbrecher, welche rechtwinklig zur Oberfläche der Gefäßwand standen und 4 mm breit waren.

In das Innere des Bechers und in den Latex tauchte ein Rührorgan, bestehend aus einer einfachen Scheibe der Dicke 2 mm und des Durchmessers 2 cm. Die Scheibe war an einem ca. 8 cm langen, in Scheibennähe ca. 5 mm nach oben sich verstärkenden Schaft angebracht, der von einem hochtourigen Motor angetrieben wurde. Die Vorrichtung besaß eine exakte Drehzahlmessung und die Umdrehungszahl ließ sich exakt auf einen bestimmten Wert, hier genau 20 000 Umdrehungen pro Minute, einregulieren. Nach einer von einer elektronischen Stoppuhr vorgegebenen Zeit, hier genau 20 Minuten, wurde der Motor abgestellt. Die gesamte Vorrichtung befand sich in einem schallisolierten Kasten. Nach dieser Scherbeanspruchung wurde der Inhalt des Metallbechers durch ein feines Sieb aus Edelstahl mit der quadratischen Maschenweite 50 Mikrometer filtriert, der im Sieb verbleibende Koagulatanteil bis zur Gewichtskonstanz getrocknet und zurückgewogen.

Die Temperatur des Latex blieb beim Rührvorgang durch externe Kühlung, Temperaturmessung im Becher und Temperaturregelung konstant, die Reproduzierbarkeit dieser Scherversuche war ausgezeichnet und ist den bekannten Vorrichtungen zur Bestimmung der Scherstabilität überlegen. Die Vorrichtung hat den Vorteil, sicher und bequem insbesondere in Bezug auf zwischenzeitliche Reinigung betrieben werden zu können.

Nach dem beschriebenen Test entstanden aus 80 g 35 %iger Dispersion bei 25 °C nach 20 Minuten Scherbeanspruchung bei 20 000 Umdrehungen pro Minute : 0,34 g Koagulat, entsprechend 1,2 % Koagulat, bezogen auf Feststoff.

Wird der Latex mit dem Feststoffgehalt von 35 % bei pH = 11-12 geschert, so ist kein Koagulat feststellbar.

## Beispiel 6 (Vergleichsbeispiel)

Beispiel 5 wird wiederholt mit dem Unterschied, daß anstelle des erfindungsgemäßen Emulgators die gleiche Menge an Kaliumoleat als Emulgator eingesetzt wird. So entsteht nach gleicher Reaktionszeit unter gleichen Bedingungen eine pastöse sehr scherempfindliche Masse, welche sich zwischen den Fingerkuppen zu Krümeln zerreiben läßt und beim Schertest unter gleichen Bedingungen wie in Beispiel 5 nahezu vollständig koaguliert und dabei noch über den Rand des Testgefäßes schäumt.

## Beispiel 7

Es soll gezeigt werden, daß Zusätze der erfindungsgemäßen Emulgatoren zu einer mit an sich bekannten anionischen Emulgatoren hergestellten Dispersion deren Scherstabilität wesentlich verbessern. Ferner wird nachgewiesen, daß entsprechende Zusätze an sich bekannter anionischer Tenside einen vergleichbaren Effekt nicht bewirken.

Als Modellsubstanz wurde ein 41 %iger entmonomerisierter Polybutadienlatex des mittleren Teilchendurchmessers 110 nm verwendet. Dieser Latex wurde nach einem halbkontinuierlichen Zulaufverfahren bei 50 °C mit Hilfe von insgesamt 1,8 Gew.-% eines Emulgatorgemisches, bestehend aus gleichen Anteilen Kaliumoleat und Natriumlaurylsulfat hergestellt, wobei als Initiatorsystem ein Redoxsystem aus einem wasserunlöslichen organischen Peroxid (p-Menthanhydroperoxid), einem wasserlöslichen Reduktionsmittel (Natriumformaldehydsulfoxylat) und FE-II-Komplexanatlösung verwendet wurde.

85 g dieses Latex wurden in ein Becherglas eingewogen, eine der in untenstehender Tabelle 3 genannte Lösung eines bestimmten Emulgators X in Wasser (5 gew.-%ig) unter Rühren hinzugefügt, mit 5 gew.-%iger Ammoniaklösung auf pH 10 eingestellt und mit Wasser auf 100 g aufgefüllt. Das Gemisch wurde danach noch ca. 30 Minuten langsam gerührt.

Anschließend bestimmte man die Rührstabilität, wobei 80 g der ca. 35 %igen Latices 20 Minuten bei 20 000 Umdrehungen pro Minute unter Konstanthaltung einer Temperatur von 25 °C im Latex in der in Beispiel 5 angegebenen Apparatur mechanisch beansprucht wurden (Schertest).

Um einen Vergleich der Wirksamkeit der verschiedenen Emulgatorzusätze zu ermöglichen, wurden zum Testlatex vor dem Verdünnen eine kleinere Menge ($2,22 \times 10^{-4}$ Mol Emulgator X/ bezogen auf 100 g Polybutadien) und in einem weiteren, davon unabhängigen Scherversuch eine größere Menge ($8,57 \times 10^{-3}$ Mol Emulgator X/bezogen auf 100 g Polybutadien) nachgesetzt. Der Effekt der kleineren (a) und größeren (b) Emulgatorzugaben geht aus folgender Tabelle 3 hervor.

Tabelle 3

| Zusatz X Art des Emulgators | Zusatz X Mol pro 100 g Polybutadien im Latex | Koagulat in % bez. auf Polybutadien |
|---|---|---|
| Natriumparaffinmonosulfonatgemisch, handelsüblich, | a = $2,22 \times 10^{-4}$ | 4,1 |
| mittl. Kettenlänge C 14 (Vergleich) | b = $8,57 \times 10^{3}$ | 3,4 |
| Sulfobernsteinsäuredioctylester | a | 3,5 |
| Na-Salz (Vergleich) | b | 1,2 |
| p-Nonylbenzolsulfonat | a | 3,5 |
| Na-Salz (Vergleich) | b | 1,2 |
| Kaliumlaurat | a | 3,4 |
| (Vergleich) | b | 1,4 |
| Kaliumoleat | a | 3,7 |
| (Vergleich) | b | 1,1 |
| Emulgator gemäß Beispiel 1 | a | 1,6 |
| (erfindungsgemäß) | b | 0,09 |

Tabelle 3 ist zu entnehmen, daß bekannte handelsübliche Emulgatoren als Zusätze zur Stabilisierung eines Polybutadienlatex gegenüber Scherbeanspruchung weniger gut geeignet sind als die erfindungsgemäßen Emulgatoren.

Beispiel 8 (erfindungsgemäß)

Es wird die Wirkungsweise eines erfindungsgemäßen Emulgators gemäß Beispiel 1 bei der Emulsionspolymerisation verschiedener Monomerer geschildert. Unter Stickstoff wurden angesetzt :

| | |
|---|---|
| Wasser : | 263 g |
| Monomeres (siehe unten) | 112,5 g |
| Kaliumperoxodisulfat | 0,526 g |
| Emulgator gemäß Beispiel 1 | (Serie A) 6,56 g |
| | oder (Serie B) 1,64 g |
| Polymerisationsdauer | 7 (h) |
| Polymerisationstemperatur | 70 (°C) |

Die Polymerisationen erfolgten in rotierenden, durch Schutzkörbe geschützten Flaschen mit einem Fassungsvermögen von 500 ml. Nach der Polymerisation wurden die Flaschen entleert, die Koagulatmengen (Koag. in g), der Feststoffgehalt der Dispersionen (F %), der pH-Wert (pH) die Auslaufzeit im Auslaufbecher nach DIN 53 211 (4 mm Düse, Auslaufzeit sec.), schließlich der mittlere Teilchendurchmesser, gemessen mit der Laser-Korrelationsspektroskopie (d, in nm) bestimmt. Ergebnisse :

Serie 8A (mit ca. 6 % Emulgator)

| Monomeres | Koag. (g) | F % | pH | Auslfz. (sec) | d [nm] | Latex |
|---|---|---|---|---|---|---|
| Methylacrylat | 0 | 30,61 | 7,3 | 11,2 | 118 | 8.A-1 |
| Ethylacrylat | 0,1 | 30,5 | 7,8 | 11,6 | 68 | 8.A-2 |
| Butylacrylat (Bu) | 0 | 29,8 | 8,3 | 11,5 | 72 | 8.A-3 |
| Methylmethacrylat | 0 | 30,7 | 8,2 | 11,5 | 62 | 8.A-4 |
| Butylmethacrylat | 0,09 | 30,9 | 10,0 | 11,6 | 55 | 8.A-5 |
| Styrol (S) | 0,06 | 30,9 | 11,2 | 11,7 | 55 | 8.A-6 |
| Vinylacetat | 0,1 | 25,3 | 6,0 | 11,4 | 60 | 8.A-7 |
| Gemisch 1:1 (Bu-S) | 0,16 | 30,0 | 7,1 | 11,7 | 54 | 8.A-8 |
| Acrylnitril (ACN) | Koaguliert und bildet Perlen | | | | | |
| Gemisch 1:1 (ACN-Bu) | 0,19 | 29,6 | 8,7 | 11,4 | 71 | 8.A-9 |

Serie 8B (mit ca. 1,5 % Emulgator)

| Monomeres | Koag. (g) | F % | pH | Auslfz. (sec) | d [nm] | Latex |
|---|---|---|---|---|---|---|
| Methylacrylat | 0,6 | 29,3 | 5,8 | 11,9 | 86 | 8-B-1 |
| Ethylacrylat | 0,9 | 29,4 | 5,8 | 11,8 | 81 | 8-B-2 |
| Butylacrylat | 0,3 | 29,1 | 5,6 | 11,8 | 90 | 8-B-3 |
| Methylmethacrylat | 0,2 | 29,7 | 6,2 | 11,6 | 75 | 8-B-4 |
| Butylmethacrylat | 0,9 | 29,6 | 7,1 | 11,8 | 98 | 8-B-5 |
| Styrol | 0,2 | 29,6 | 9,2 | 11,9 | 84 | 8-B-6 |
| Vinylacetat | 0,8 | 28,6 | 4,6 | 11,4 | 135 | 8-B-7 |
| Gemisch 1:1 (Bu-S) | 1,7 | 29,3 | 4,9 | 11,9 | 94 | 8-B-8 |
| Gemisch 1:1 (ACN-AB) | 1,6 | 29,1 | 6,8 | 11,9 | 85 | 8-B-9 |

Aus den Tabellen, Versuchsserie A und B des Beispiels 8 geht hervor, daß der sich einstellende pH-Wert der diversen Latices stark von der Art des Monomeren und von der Gesamtmenge an eingesetztem Emulgator abhängt.

Die in der Versuchsserie B auftretenden Koagulatmengen lassen sich vollständig unterdrücken, wenn der verwendeten Kaliumperoxodisulfatmenge äquivalente Mengen einer Wasserstoffionen abfangenden Substanz wie beispielweise $NaHCO_3$ oder $Na_2HPO_4$ zusätzlich mitverwendet werden.

Werden die Latices der Versuchsserie 8A (ca. 5,9 % Emulgator bezogen auf Polymerisat) auf einen Feststoffgehalt von ca. 20 % verdünnt und auf einen pH-Wert von 10 eingestellt und anschließend 20 Minuten bei 20 000 Umdrehungen pro Minute in der in Beispiel 5 beschriebenen Apparatur einer Scherbeanspruchung unterworfen, so ist keinerlei Koagulatbildung zu beobachten.

Werden die Latices der Versuchsserie 8B (1,45 % Emulgator, bezogen auf Polymerisat) auf einen Feststoffgehalt von 20 % verdünnt und auf einen pH-Wert von 10 durch Zugabe von $NH_3$-Wasser eingestellt, so fallen aus 50 g dieser verdünnten Dispersionen unterschiedliche Koagulatmengen aus :

| Latex | Bezeichnung | Schertest: Koagulatmenge (g) |
|---|---|---|
| 8-B-1 | Methylacrylat | 0,03 |
| 8-B-2 | Ethylacrylat | 0,11 |
| 8-B-3 | Butylacrylat | 2,2 |
| 8-B-4 | Methylmethacrylat | 0,03 |
| 8-B-5 | Butylmethacrylat | 0,05 |
| 8-B-6 | Styrol | 4,5 |
| 8-B-7 | Vinylacetat | 0,25 |
| 8-B-8 | Gemisch Bu-S | 2,1 |
| 8-B-9 | Gemisch ACN-AB | 0,06 |

Beispiel 9 (Vergleichsversuche)

Es wird die Wirkungsweise bekannter Emulgatoren bei der Emulsionspolymerisation verschiedener Monomerer mit jener der erfindungsgemäßen Emulgatoren verglichen, Polymerisiert wurde der Standardansatz :

| | |
|---|---|
| Wasser | 263,0 g |
| Monomeres (vgl. unten) | 112,5 g |
| $K_2S_2O_8$ | 0,526 g |
| Emulgator (vgl. unten) | 5,56 g |
| Polymerisationstemperatur | 70 °C |
| Polymerisationsdauer | 7 Stunden |

Die Polymerisation erfolgte in 500 ml Flaschen wie oben beschrieben.

Als Emulgatoren wurden einmal in Versuchsserie 9A ein Gemisch von Natriumalkansulfonaten der mittleren Kettenlänge von 14 C-Atomen (vgl. z. B. W. Kupfer, J. Jainz und H. Kettler, Tenside, 6, 1969, Heft 1, Seiten 15-21) verwendet, ferner ein Emulgator, der als schwefelsaures Ammoniumsalz eines mit 10 Mol Ethylenoxid umgesetzten und anschließend sulfatierten Laurylalkohols anzusprechen ist $R—O—(CH_2—CH_2—O)_{10}—SO_3NH_4$ (Versuchsserie 9B).

Nachfolgend werden die polymerisierten Monomeren, die Koagulatmenge, der Feststoffgehalt der Latices und der mit Hilfe der Laserkorrelationsspektroskopie ermittelten mittleren Teilchendurchmesser der Dispersionen angeführt :

(Siehe Tabelle Seite 12 f.)

Versuchsserie 9A (Alkansulfonat-Emulgator)

| Monomeres | Koagulat (g) | Feststoff-gehalt % | Latexteilchendurchmesser (nm) | Bezeichnung |
|---|---|---|---|---|
| Methylacrylat | 0,21 | 30,5 | 195 | 9A-1 |
| Ethylacrylat | 0,15 | 30,1 | 71 | 9A-2 |
| Butylacrylat | 0,06 | 29,7 | 74 | 9A-3 |
| Methylmethacrylat | 0,04 | 31,0 | 70 | 9A-4 |
| Butylmethacrylat | 7,6 | 30,1 | 58 | 9A-5 |
| Styrol | 0,12 | 30,9 | 79 | 9A-6 |
| Gemisch 1:1 Bu-S | 0,88 | 30,8 | 66 | 9A-7 |
| Gemisch 1:1 ACN-Bu | 0,21 | 31,0 | 87 | 9A-8 |

Versuchsserie 9B (Sulfatiertes Alkohol-Ethylenoxidaddukt)

| Monomeres | Koagulat (g) | Feststoffgeh. (%) | Latexteilchen-durchm. (nm) | Bezeichnung |
|---|---|---|---|---|
| Methylacrylat | 0,04 | 30,6 | 100 | 9 B-1 |
| Ethylacrylat | 0,04 | 30,9 | 88 | 9 B-2 |
| Butylacrylat | 0,27 | 30,8 | 87 | 9 B-3 |
| Methylmethacrylat | 0,0 | 31,2 | 75 | 9 B-4 |
| Butylmethacrylat | 3,5 | 30,6 | 66 | 9 B-5 |
| Styrol | 15,5 | 30,1 | 73 | 9 B-6 |
| Gemisch 1:1 Bu-S | 3,3 | 30,5 | 71 | 9 B-7 |
| Gemisch 1:1 ACN-Bu | 0,9 | 30,9 | 81 | 9 B-8 |
| Vinylacetat | 0,0 | 28,9 | 145 | 9 B-9 |

Die Scherstabilität der Latices der Serie 9A konnte nicht bestimmt werden, da die entsprechenden Dispersionen aus dem Testbecher schäumten. Soweit feststellbar war, enthielten die Dispersionen bereits nach kurzer Scherbeanspruchung erhebliche Mengen an Koagulat.

Die Latices der Versuchsserie 9B waren hingegen schaumärmer und es ergaben sich nach der Scherbeanspruchung von 50 g 20 %igem Latex, pH = 10 folgende Ergebnisse :

| Latex | Bezeichnung | Koagulatmenge (g) |
|---|---|---|
| 9 B-1 | Methylacrylat | Latex schäumte über |
| 9 B-2 | Ethylacrylat | 5,3 Koagulat |
| 9 B-3 | Butylacrylat | 6,0 Koagulat |
| 9 B-4 | Methylmethacrylat | 0,05 Koagulat |
| 9 B-5 | Butylmethacrylat | 8,7 Koagulat |

Tabelle (Fortsetzung)

| Latex | Bezeichnung | Koagulatmenge (g) | |
|---|---|---|---|
| 9 B-6 | Styrol | 5,5 | Koagulat |
| 9 B-7 | Gemisch Bu-S | 5,01 | Koagulat |
| 9 B-8 | Gemisch ACN-Bu | 4,15 | Koagulat |
| 9 B-9 | Vinylacetat | Latex schäumte über | |

Diese Ergebnisse verglichen mit jenen aus Beispiel 8, zeigen die überlegene Wirkungsweise der erfindungsgemäßen Emulgatoren. Die Latices der Serie 8B aus Beispiel 8 waren mit nur ca. 1,45 % Emulgator, bezogen auf Polymerisat, hergestellt worden und ergaben Latices meist besserer Scherstabilität als jene der Versuchsserie 9B mit einem Anteil von ca. 6 % Emulgator, bezogen auf Polymerisat. Ein Vergleich der stabilisierenden Wirksamkeit der Emulgatoren ist insofern möglich, als es sich bei der Serie 8B und 9B um Latices vergleichbaren Durchmessers handelt. Wird bei vergleichbarem Teilchendurchmesser durch ein weit höheres Angebot eines Emulgators (hier des Ethersulfates) ein schlechteres Ergebnis nach der Scherbeanspruchung erhalten, so darf gefolgert werden, daß der betreffende Emulgator zur Stabilisierung der entsprechenden Dispersion weit weniger beiträgt als der erfindungsgemäße Emulgator.

**Patentansprüche**

1. Aminobernsteinsäurederivate der Formel (I)

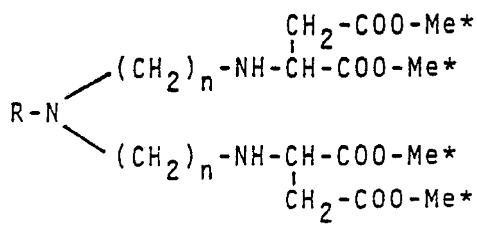

worin

R für einen Alkyl- oder Alkenylrest mit 10 bis 22 C-Atomen, der verzweigt und/oder durch ein oder mehrere Sauerstoffatome unterbrochen sein kann, steht,

n 2 oder 3 und

$Me^{*}$ Wasserstoff oder ein einwertiges Kation bedeutet oder 2 $Me^{++}$ für ein zweiwertiges Kation stehen.

2. Verfahren zur Herstellung der Aminobernsteinsäurederivate gemäß Anspruch 1, dadurch gekennzeichnet, daß man einen Maleinsäure- oder Fumarsäuredialkylester und ein Bis-(ω-aminoalkyl)-alkylamin der Formel

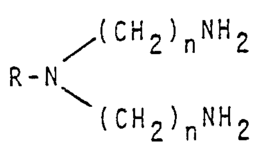

worin R und n die gleiche Bedeutung haben wie in Anspruch 1, umsetzt, das Reaktionsprodukt mit Alkali- oder Erdalkalihydroxiden behandelt und es gegebenenfalls neutralisiert und mit Ammoniak, Alkylaminen oder Alkanolaminen umsetzt.

3. Verwendung der Derivate der Formel (I) gemäß Anspruch 1 als Emulgatoren.

**Claims**

1. Aminosuccinic acid derivatives corresponding to formula (I)

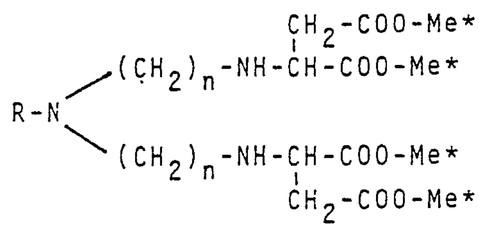

in which

R is a $C_{10}$-$C_{22}$ alkyl or alkenyl radical which may be branched and/or interrupted by one or more oxygen atoms,

n = 2 or 3 and

$Me^+$ is hydrogen or a monovalent cation or 2 $Me^{++}$ may stand for a divalent cation.

2. A process for the production of the aminosuccinic acid derivatives claimed in claim 1, characterized in that a maleic or fumaric acid dialkyl ester and a bis-(ω-aminoalkyl)-alkylamine corresponding to the formula

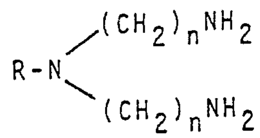

in which R and n have the same meaning as in claim 1, are reacted, the reaction product is treated with alkali or alkaline earth hydroxides and optionally neutralized and reacted with ammonia, alkylamines or alkanolamines.

3. The use of the derivatives corresponding to formula (I) claimed in claim 1 as emulsifiers.

## Revendications

1. Dérivés de l'acide aminosuccinique de formule (I)

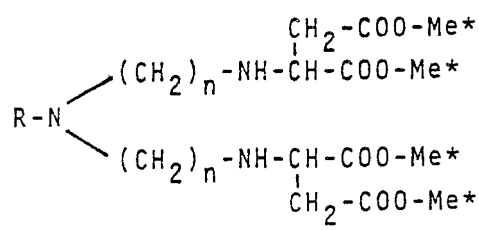

dans laquelle

R représente un reste alkyle ou alcényle ayant 10 à 22 atomes de carbone, qui peut être ramifié et/ou interrompu par un plusieurs atomes d'oxygène,

n vaut 2 ou 3 et

$Me^+$ représente un atome d'hydrogène ou un cation monovalent ou bien 2 $Me^{++}$ représente un cation divalent.

2. Procédé pour préparer des dérivés de l'acide aminosuccinique selon la revendication 1, caractérisé en ce qu'on fait réagir un ester dialkylique de l'acide maléique ou de l'acide fumarique et une bis-(ω-aminoalkyl)-alkylamine de formule

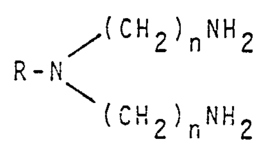

dans laquelle R et n ont le même sens qu'à la revendication 1, on traite le produit de la réaction par des hydroxydes alcalins ou alcalinoterreux et on le neutralise éventuellement et on le fait réagir avec l'ammoniaque, des alkylamines ou des alcanolamines.

3. Utilisation des dérivés de formule (I) selon la revendication 1, à titre d'émulsifiants.